# EUROPEAN PATENT SPECIFICATION

(11) **EP 2 270 263 B1**
(45) Date of publication and mention of the grant of the patent: **12.11.2014**
(21) Application number: 09762316.9
(22) Date of filing: 24.03.2009
(51) Int. Cl.: C25F 3/24, B23H 5/08, B23H 9/00, C22C 38/00, C22C 38/18, C22C 38/28, C22C 38/60

(54) **STAINLESS STEEL AND SURFACE TREATMENT METHOD FOR STAINLESS STEEL**
EDELSTAHL UND OBERFLÄCHENBEHANDLUNGSVERFAHREN FÜR EDELSTAHL
ACIER INOXYDABLE ET PROCÉDÉ DE TRAITEMENT DE SURFACE POUR ACIER INOXYDABLE

(30) Priority: 09.06.2008 JP 2008150876
(43) Date of publication of application: 05.01.2011
(73) Proprietor: Tokyo Stainless Grinding Co., Ltd., Tokyo 131-0045 (JP)
(72) Inventor: AOYAGI, Taiji, Yachiyo-shi Chiba 276-0046 (JP); KASAI, Toshio, Yachiyo-shi Chiba 276-0046 (JP); ARAKAWA, Motohiko, Yachiyo-shi Chiba 276-0046 (JP); KUSAKABE, Shigeru, Tokyo 131-0045 (JP)
(74) Representative: Keller, Günter
(86) International application number: PCT/JP2009/056415
(87) International publication number: WO 2009/150885

(56) References cited:
- JP-A- 7 241 728
- JP-A- H0 770 730
- JP-A- 2007 138 283

## Description

### TECHNICAL FIELD

The present invention relates to a stainless steel and a surface treatment method for the stainless steel.

### BACKGROUND ART

Generally, steel products such as H-beams, columns, square pipes, and flat bars have an extremely rough surface (pickled surface), a microscopic surface defect, a welding deformation portion, and the like. In order to provide the surface of steel products with a glossy finish or hairline finish required for building materials or the like, the surface should be polished.

For example, in order to process the steel products for decorative purposes, surface polishing is performed but accurate dimensions are not necessarily required. Namely, in such surface polishing, a surface luster generation process is often performed to remove the acid pickled surface and microscopic surface defect layer, while waviness and troughs that are unavoidable in the manufacturing process remain as they are.

For generating the surface luster, for example, grindstone grinding, mechanical grinding, full-face nonwoven cloth low-current density electrolytic polishing (electrolytic polishing performed at a low current density by using a polishing head fully covered with nonwoven cloth), and the like are used. The full-face nonwoven cloth low-current density electrolytic polishing is specifically described in the Hitachi Zosen Technical Review Volume 42, No. 3, pages 15 to 22 (Non-Patent Document 1).

However, with the full-face nonwoven cloth low-current density electrolytic polishing, since the current density is low (e.g. 0.05 to 5 A/cm²), the polishing power is weak and a significant surface-reduction treatment is not performed. In addition, the polishing speed is extremely low and the process is therefore very costly. Meanwhile, a problem arising when the full-face nonwoven cloth electrolytic polishing with a polishing head fully covered with nonwoven cloth is performed at a high current density (e.g. 5 to 100 A/cm²) is that hydrogen gas and eluted metal ions are generated in large amounts and these cannot be immediately removed to perform the electrolytic polishing in a continuous mode.

Accordingly, an electrolytic surface-reduction method has been invented (WO 2005/000512 (Patent Document 1)) by which electrolytic polishing is conducted continuously, while maintaining high polishing efficiency such as polishing speed. This method uses a rotation surface-reducing head having a head base and a rotary shaft, wherein two or more electrodes, grindstones, and arbitrarily provided flexible abrasive grain units are disposed on a bottom surface of the head base. With this method, electrolytic surface reduction is performed by applying a voltage to the electrodes, while causing an electrolyte solution to flow between the electrodes and a surface-reduced object. JP 07 070 730 discloses a stainless steel having a passive coating having ≥900 mV pitting corrosion potential.

However, even when electrolytic surface reduction is performed with this method, an oxide formed on the surface does not have sufficient thickness and the rust resistance and corrosion resistance are sometimes insufficient.

### DISCLOSURE OF INVENTION

With the foregoing in view, for example, there is a demand for a stainless steel with an oxide film of sufficient thickness. There is also a demand, for example, for a stainless steel with high rust resistance and corrosion resistance.

The inventors have discovered a surface treatment method for a stainless steel that forms a comparatively thick oxide coat and created the present invention on the basis of this discovery. The present invention given in the claims provides the following stainless steel and surface treatment method for the stainless steel.
[1] A stainless steel including: 0.001 to 0.15 wt% of C, 0.01 to 1.00 wt% of Si, 0.01 to 10.00 wt% of Mn, 0.001 to 0.060 wt% of P, 0.0001 to 0.10 wt% of S, 3.50 to 28.00 wt% ofNi, 16.00 to 26.00 wt% of Cr, and 0.001 to 0.08 wt% of O, optionally the stainless steel according to [1], further including: 2.00 wt% or less of Al, 7.00 wt% or less of Mo, 4.00 wt% or less of Cu, and 0.30 wt% or less of N, 0.75 or less Ti with a balance comprising Fe and unavoidable impurities, wherein a pitting corrosion potential Vc' 100 of a surface is 0.60 to 1.2 (V vc. Ag-AgCl), and wherein a half-width of an element concentration distribution of O in GDS analysis is 20 to 100 nm from a stainless steel surface.
[2] The stainless steel according to [1], including: 0.001 to 0.08 wt% of C, 0.01 to 1.00 wt% of Si, 0.01 to 2.00 wt% of Mn, 0.001 to 0.045 wt% ofP, 0.0001 to 0.030 wt% of S, 8.00 to 10.50 wt% of Ni, 18.00 to 20.00 wt% of Cr, and 0.001 to 0.06 wt% of O, wherein the pitting corrosion potential Vc' 100 of the surface is 0.70 to 1.2 (V vc. Ag-AgCl).
[3] The stainless steel according to any one [1] to [2], that excels in rust resistance and corrosion resistance.

In the present description, the expression "with the balance being Fe and unavoidable impurities" means that the balance of the stainless steel includes small impurity amounts of alkali metals, alkaline earth metals, rare earth metals, and transition metals in addition to Fe. Further, the following elements may be contained in the following ranges: 4.00 wt% or less of Al, 7.00 wt% or less of Mo, 4.00 wt% or less of Cu, 0.30 wt% or less ofN, and 0.75 wt% or less of Ti.

Here, the surface reduction means the reduction of a surface of a surface-reduced workpiece (object to be surface-reduced), and specifically means polishing or grinding. Namely, a rotation surface-reducing head means a polishing head or a grinding head, a surface-reducing device means a polishing device or a grinding device, and a surface-reducing method means a polishing method or a grinding method.

Where the surface treatment method for a stainless steel according to the preferred embodiment of the present invention is used, a comparatively thick oxide can be formed on the stainless steel.

The stainless steel according to the preferred embodiment of the present invention has high rust resistance and corrosion resistance.

### BRIEF DESCRIPTION OF THE DRAWINGS

FIG 1A is a perspective view of a rotation surface-reducing head for electrolytic abrasive grain surface-reduction with electrodes and grindstones disposed thereon.
FIG 1B is a schematic diagram showing a bottom surface of a rotation surface-reducing head for electrolytic abrasive grain surface-reduction with electrodes and grindstones disposed thereon.
FIG 1C is a cross-sectional view taken along an A-A line in FIG 1B.
FIG 2A is a perspective view of a rotation surface-reducing head for electrolytic abrasive grain surface-reduction with electrodes, grindstones, and flexible abrasive grain units disposed thereon.
FIG 2B is a schematic diagram showing a bottom surface of a rotation surface-reducing head for electrolytic abrasive grain surface-reduction with electrodes and grindstones, and flexible abrasive grain units disposed thereon.
FIG 2C is a cross-sectional view taken along a B-B line in FIG 2B.
FIG 3 is an overall view showing a surface-reducing device.
FIG 4 is a schematic diagram showing an effect of an electrode when performing surface reduction of a stainless steel by using a rotation surface-reducing head.
FIG 5 is a schematic diagram showing an effect of a flexible abrasive grain unit when performing surface reduction of a stainless steel by using a rotation surface-reducing head.
FIG 6A is a perspective view of a roller for electrolytic abrasive grain surface-reduction that has a pattern facing the stainless steel.
FIG 6B is a cross-sectional view taken along a C-C line in FIG 6A.
FIG 7A is a schematic diagram showing an electrolytic surface-reduction treatment performed with a rotation abrasive grain belt or a rotation flexible abrasive grain unit belt.
FIG 7B is a schematic diagram showing an electrolytic surface-reduction treatment performed with a rotation grindstone or a rotation flexible abrasive grain unit.
FIG 8A is a schematic diagram showing an electrolytic surface-reduction treatment performed using a deflector roller and a guide roller.
FIG 8B is a schematic diagram showing an electrolytic surface-reduction treatment performed with a deflector roller and a guide roller.
FIG 9 shows element concentration analysis results obtained by GDS in the depth direction for surface-treated SUS304 stainless steel 1 in Example 1.
FIG 10 shows element concentration analysis results obtained by GDS in the depth direction for surface-treated SUS304 stainless steel 1 in Comparative Example 1.

### EXPLANATION OF REFERENCE NUMERALS

- 1: surface-reducing device
- 2: rotation surface-reducing head for electrolytic abrasive grain surface-reduction
- 210: rotation surface-reducing head for electrolytic abrasive grain surface-reduction
- 220: rotation surface-reducing head for electrolytic abrasive grain surface-reduction
- 21: head base
- 22: rotary shaft
- 23: tubular portion
- 24: liquid reservoir
- 25: electrode
- 26: grindstone
- 27: flexible abrasive grain unit
- 271: elastic body
- 272: surface-reducing cloth
- 4: electrolyte supplying portion
- 5: energizing portion
- 6: insulating coupling
- 7: head rotating motor
- 8: elevating portion
- 9: stainless steel
- 300: roller for electrolytic abrasive grain surface-reduction
- 310: rotation abrasive grain belt or rotation flexible abrasive grain unit belt
- 320: rotation grindstone or rotation flexible abrasive grain unit
- 410: deflector roller
- 420: guide roller

### BEST MODE FOR CARRYING OUT THE INVENTION

The stainless steel and surface treatment method for the stainless steel in accordance with the present invention will be explained below. However, the present invention is not limited to the description of the best mode for carrying out the invention.

The surface treatment in accordance with the present invention can be performed, for example, with a rotation surface-reducing head for electrolytic abrasive grain surface-reduction or a roller for electrolytic abrasive grain surface-reduction.

### 1. Electrolytic abrasive grain surface-reduction treatment using rotation surface-reducing head for electrolytic abrasive grain surface-reduction

### 1.1 Rotation surface-reducing head for electrolytic abrasive grain surface-reduction with electrodes and grindstones disposed thereon

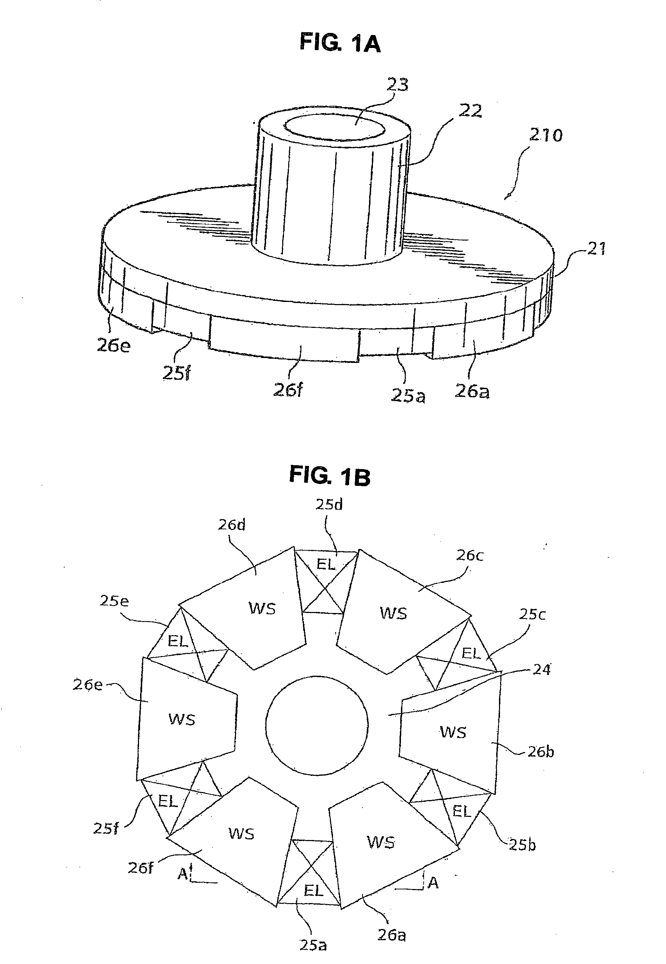

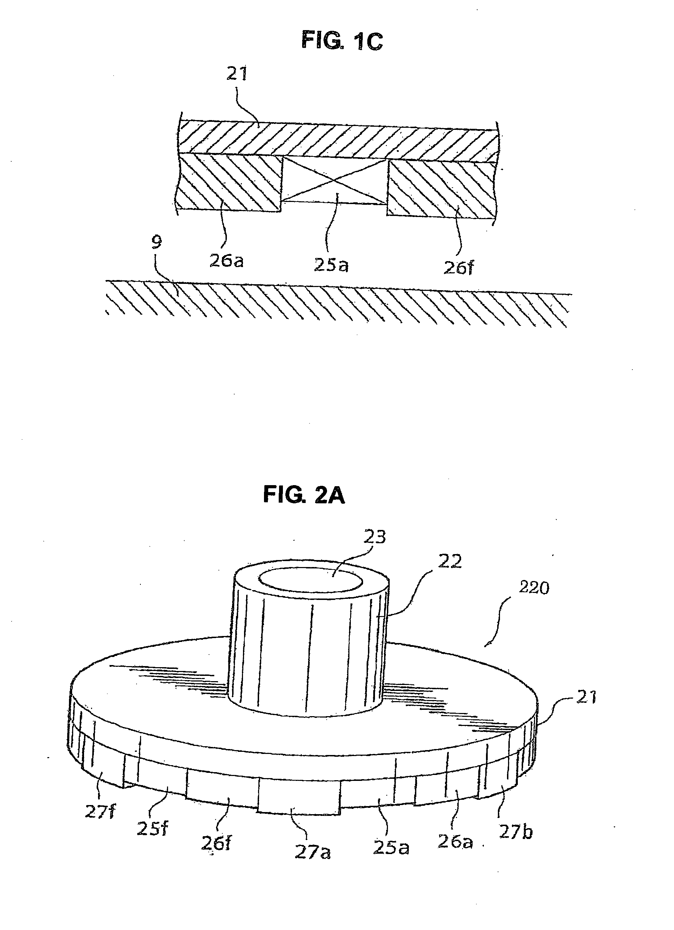

Firstly, a rotation surface-reducing head 210 for electrolytic abrasive grain surface-reduction with electrodes and grindstones disposed thereon will be described with reference to FIG 1A to FIG 1C. FIG 1A is a perspective view of the rotation surface-reducing head 210, FIG 1B is a schematic diagram showing a bottom surface of the rotation surface-reducing head 210, and FIG 1C is a cross-sectional view taken along an A-A line in FIG 1B.

Referring to FIG 1A to FIG 1C, the rotation surface-reducing head 210 for electrolytic abrasive grain surface-reduction with electrodes and grindstones disposed thereon has a head base 21, a rotary shaft 22, and also electrodes 25a to 25f and grindstones 26a to 26f provided on the head base. The rotary shaft 22 has a hollow structure and has a tubular portion 23 for passing an electrolyte. In addition, the head base 21 and the rotary shaft 22 are integrated together.

As shown in FIG 1B, the electrodes 25 and the grindstones 26 are sequentially disposed along the outer periphery on the head base 21 having a round bottom surface, and a concave liquid reservoir 24 is provided in the center section thereof The liquid reservoir 24 communicates with the tubular portion 23 so that an electrolyte flowing through the tubular portion 23 flows into the liquid reservoir 24. Normally, sets are used in which the electrode 25 and the grindstone 26 are disposed in this order, and a plurality of sets are disposed repeatedly to cover the entire outer periphery of the head base 21.

FIG 1C is a cross-sectional view taken along an A-A line in FIG 1B. In FIG 1C, for the sake of explanation, a configuration is shown in which a stainless steel 9 and a rotation surface-reducing head 210 face each other.

FIG 1C shows an attached state of the electrode 25 and the grindstone 26 to the head base 21 and a mutual arrangement thereof and the stainless steel. Therefore, the stainless steel 9 is also shown in FIG 1C.

As shown in FIG 1C, the electrode 25 and the grindstone 26 are disposed so that the bottom surface (surface facing the stainless steel 9) of the grindstone 26 is close to the stainless steel 9 and the bottom surface of the electrode 25 does not contact the stainless steel 9. This arrangement represents a state in which the surface-reduction is not performed.

Here, it is preferable that the six electrodes 25a to 26f be disposed so that each of them has the same height in order to maintain a constant current density during energizing. In addition, it is preferable that the grindstones 26a to 26f be disposed so that each of them has the same height in order to maintain a constant accuracy of surface-reduction.

Thus, by disposing the grindstone 26 higher than the electrode 25, a predetermined distance can be kept between the electrode 25 and the stainless steel (not shown), so that a spark between the electrode and the stainless steel (not shown) during the electrolytic surface-reduction can be prevented and a channel for the electrolyte can be ensured.

While the electrode 25 for use in the rotation surface-reducing head 210 for electrolytic abrasive grain surface-reduction is not specifically limited as long as it is one that can be used in electrolytic abrasive grain surface-reduction, e.g. stainless steel and the like can be used. For the grindstone 26 for use in the rotation surface-reducing head 210 for electrolytic abrasive grain surface-reduction, a commercially available usual grindstone can be used. In addition, it is preferable that the grindstone 26 for use in the rotation surface-reducing head 210 for electrolytic abrasive grain surface-reduction be an elastic grindstone.

By using the rotation surface-reducing head 210, specifically a trough of 0.1 mm or less can be efficiently surface-reduced.

### 1.2 Rotation surface-reducing head for electrolytic abrasive grain surface-reduction with electrodes, grindstones, and flexible abrasive grain units disposed thereon

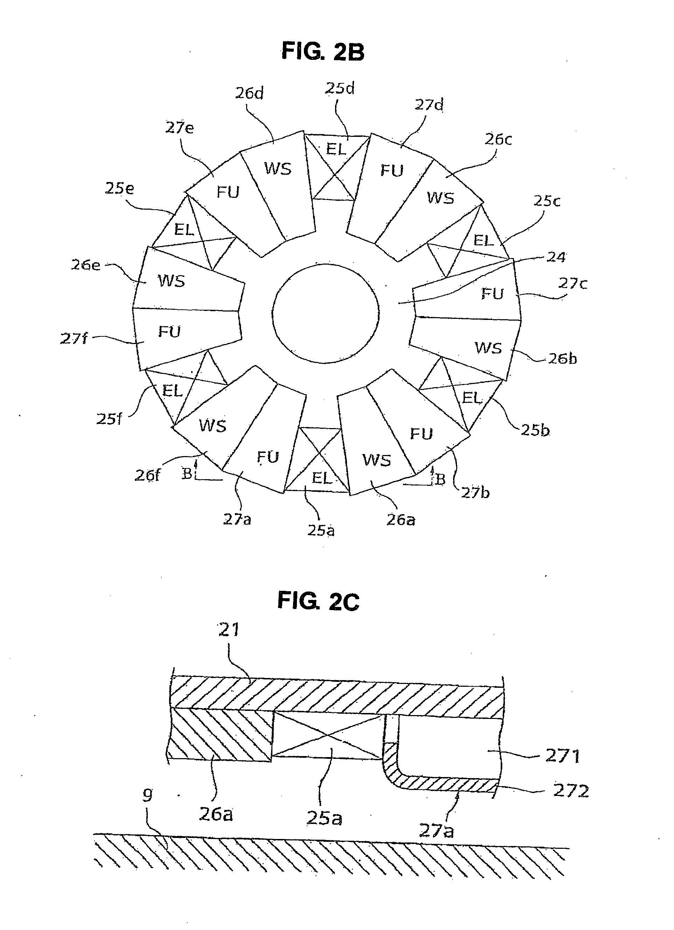

Next, a rotation surface-reducing head 220 for electrolytic abrasive grain surface-reduction with electrodes, grindstones, and flexible abrasive grain units disposed thereon will be described by using FIG 2A to FIG 2C. FIG 2A is a perspective view of the rotation surface-reducing head 220, FIG 2B is a schematic diagram showing a bottom surface of the rotation surface-reducing head 220, and FIG 2C is a cross-sectional view taken along a B-B line on FIG 2B.

In FIG 2A to FIG 2C, the surface-reducing head 220 has a head base 21, a rotary shaft 22, and also the electrodes 25a to 25f, the grindstones 26a to 26f, and the flexible abrasive units 27a to 27f provided on the head base. The rotary shaft 22 has a hollow structure and has a tubular portion 23 for passing an electrolyte. In addition, the head base 21 and the rotary shaft 22 are integrated together.

As shown in FIG 2B, the electrodes 25, the grindstones 26, and the flexible abrasive units 27 are sequentially disposed along the outer periphery on the head base 21 having a round bottom surface, and a concave liquid reservoir 24 is provided in the center section thereof. The liquid reservoir 24 communicates with the tubular portion 23 so that an electrolyte flowing through the tubular portion 23 flows into the liquid reservoir 24. Normally, sets are used in which the electrode 25, the grindstone 26, and the flexible abrasive unit 27 is disposed in this order, and a plurality of sets are disposed repeatedly to cover the entire outer periphery of the head base 21. This arrangement order of the electrode, grindstone and flexible abrasive unit is not limiting.

FIG 2C is a cross-sectional view taken along a B-B line in FIG 2B. In FIG 2C, for the sake of explanation, a configuration is shown in which a stainless steel 9 and a rotation surface-reducing head 220 face each other.

Similarly to FIG 1C, FIG 2C shows an attached state of the electrode 25, the grindstone 26, and the flexible abrasive unit 27 to the head base 21 and a mutual arrangement thereof and the stainless steel.

As shown in FIG 2C, the electrode 25, the grindstone 26, and the flexible abrasive unit 27 are disposed so that the bottom surface (surface facing the stainless steel 9) of the flexible abrasive unit 27 is the closest to the stainless steel 9, the bottom surface of the grindstone 26 is the next closest to the stainless steel 9, and the bottom surface of the electrode 25 is the farthest from the stainless steel 9. In other words, the electrode 25, the grindstone 26, and the flexible abrasive grain unit 27 are disposed so that the flexible abrasive grain unit 27, the grindstone 26, and the electrode 25 project in this order downward (in the direction of the stainless steel 9) from the bottom surface (surface facing the stainless steel 9) of the head base 21. This arrangement represents a state when the surface-reduction is not performed.

In addition, one of the specific features of the rotation surface-reducing head 220 is that a flexible abrasive grain unit is used, in addition to the electrode and the grindstone, as a member constituting the surface that performs the electrolytic surface-reduction. The flexible abrasive grain unit used herein has elasticity, so that surface-reduction of concavities and convexities of a surface, specifically the concavities, can be efficiently performed. Therefore, the flexible abrasive grain unit 27 is a unit having an elastic body 271 such as a foamed rubber with a surface-reducing cloth 272 affixed thereto.

Unless specifically mentioned, the head base 21, the rotary shaft 22, the tubular portion 23, the liquid reservoir 24, the electrodes 25a to 25f, and the grindstones 26a to 26f are similar to those in the configuration of the rotation surface-reducing head 210 for electrolytic abrasive grain surface-reduction with electrodes and grindstones disposed thereon.

### 1.3. Electrolytic abrasive grain surface-reducing device and electrolytic abrasive grain surface-reduction treatment

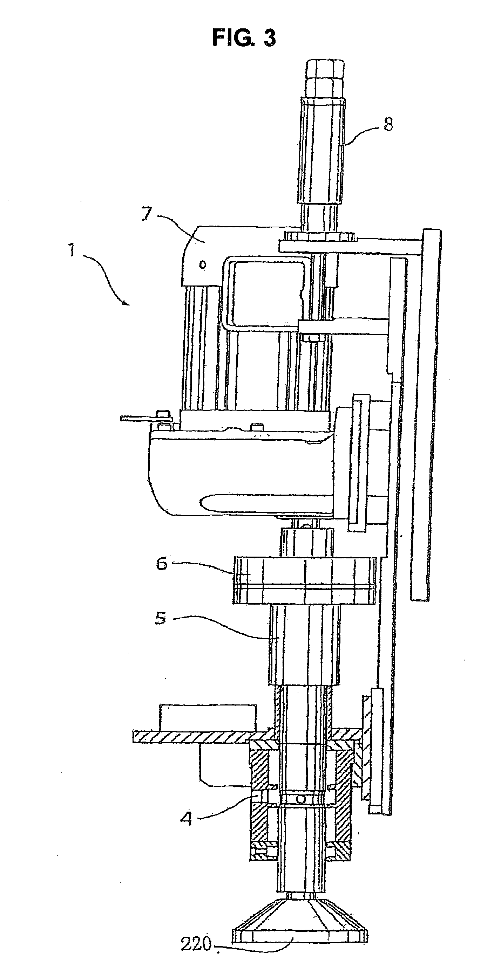

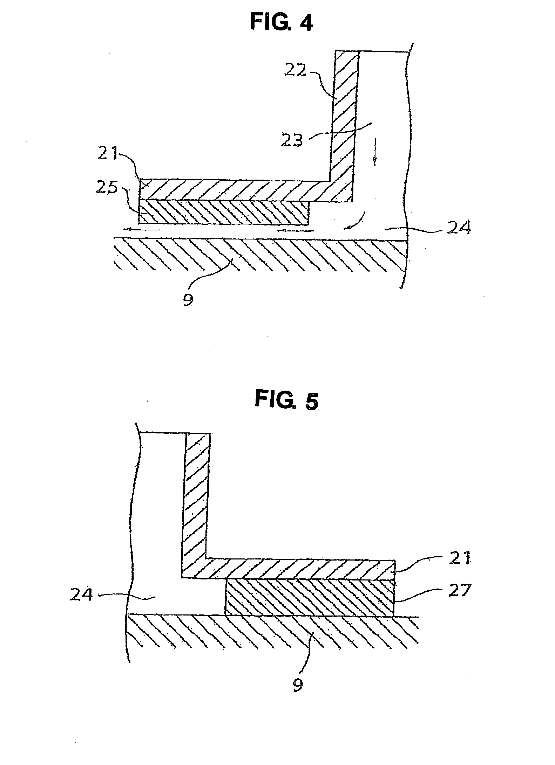

An electrolytic abrasive grain surface-reducing device using the rotation surface-reducing head 220 for electrolytic abrasive grain surface-reduction with electrodes, grindstones, and flexible abrasive grain units disposed thereon and an electrolytic abrasive grain surface-reduction treatment using the electrolytic abrasive grain surface-reducing device will be described below with reference to FIG 3 and FIG 4.

FIG 3 is an overall view showing the surface-reducing device 1. As shown in FIG 3, the surface-reducing device 1 mainly has the rotation surface-reducing head 220, an electrolyte supplying portion 4, an energizing portion 5, an insulating coupling 6, a head rotating motor 7, and an elevating device 8.

The electrolyte supplying portion 4 is a means for applying a predetermined pressure to the electrolyte to supply the electrolyte to the rotation surface-reducing head 220. Thus, the electrolyte is supplied to the liquid reservoir 24 through the rotary shaft 22 of the rotation surface-reducing head 220 as shown in FIG 4. As the electrolyte, e.g. an aqueous solution of sodium nitrate, an aqueous solution of sodium sulfate, and the like may be used.

In addition, a difference in electric potential between the electrode 25 of the rotation surface-reducing head 220 and the stainless steel 9 is generated by the energizing portion 5, so that a current of a predetermined current density flows in the electrolyte flowing therebetween. The insulating coupling 6 is a means for current leakage prevention. In addition, the head rotating motor 7 and the rotation surface-reducing head 220 are coupled directly or indirectly to each other so that the rotating force of the head rotating motor 7 is transmitted to the rotation surface-reducing head 220.

The stainless steel 9 is placed below the rotation surface-reducing head 220 face-to-face therewith, and the rotated surface-reducing head 220 is pressed by a predetermined pressure against the stainless steel 9 by the elevating device 8, so that the stainless steel is subjected to an electrolytic abrasive grain surface-reduction treatment.

Next, an abrasive grain electrolytic surface-reduction treatment of the stainless steel 9 by the electrolytic abrasive grain surface-reducing device 1 having the rotation surface-reducing head 220 will be described by using FIG 4 and FIG 5.

The electrolytic abrasive grain surface-reduction treatment is performed by lowering the rotating surface-reducing head 220 by the elevating device 8 and pressing the head against the stainless steel 9 by a predetermined pressure.

As described above, the electrodes 25, the grindstones 26, and the flexible abrasive grain units 27 are provided on the bottom surface of the rotation surface-reducing head 220, and the surface-reduction is performed by these three portions.

The electrolytic abrasive grain surface-reduction treatment is performed by using the stainless steel sheet as a positive electrode and the electrodes of the surface-reducing head as negative electrodes. In this case, gas generated at the electrodes (negative electrodes) is released to the outside of the system by a centrifugal force generated by rotation of the surface-reducing head and also by a liquid flowing outward from the liquid reservoir 24.

Hereinafter, the electrolytic abrasive grain surface-reduction treatment will be described separately for the above-mentioned three portions.

### 1.3.1. Electrode

FIG 4 is a part of a cross-sectional view where a plane including a central axis (rotary shaft) and the electrode 25 of the rotation surface-reducing head 220 is a plane of section. This figure is a schematic diagram illustrating the action of the electrode 25 when the stainless steel 9 is surface-reduced by using the rotation surface-reducing head 220.

Arrows shown in FIG 4 indicate how the electrolyte flows. Namely, the tubular portion 23 and the liquid reservoir 24 communicate with each other so that the electrolyte supplied from the electrolyte supplying portion 4 of the surface-reducing device 1 to which the rotation surface-reducing head 220 is attached passes through the tubular portion 23 in the rotary shaft 22 and is supplied to the convex liquid reservoir 24. The electrolyte supplied to the liquid reservoir 24 flows at a predetermined flow velocity through a gap between the electrode 25 and the stainless steel 9 under the effect of pressure applied by the electrolyte supplying portion 4 and the centrifugal force. It is preferable that the above-mentioned flow velocity be 5 to 10 m/sec, or more preferably 6 to 7 m/sec, so that electrolytic effluent and hydrogen generated from the surfaces of the electrode 25 and the stainless steel 9 be immediately removed.

In addition, where a negative voltage is applied to the electrode 25 and a positive voltage is applied to the stainless steel 9, an electric current flows such that the current density in the electrolyte between the electrode 25 and the stainless steel 9 becomes 5 to 40 A/cm². It is more preferable that the above-mentioned current density be 10 to 20 A/cm². This electric current generates hydrogen from the surface of the electrode 25, and the electrolytic eluate is generated from the surface of the stainless steel 9, but these hydrogen and electrolytic eluate are discharged together with the electrolyte.

### 1.3.2. Grindstone

As described above, the grindstone 26 disposed on the head base 21 is disposed so as to be closer to the stainless steel 9 than the electrode 25. Since the grindstone 26 has high resistance to pressure-induced deformation, even if a pressure is applied to the stainless steel 9 by the elevating device 8 during the surface-reduction treatment, a predetermined distance can be maintained between the electrode 25 and the stainless steel 9, thereby preventing a spark during the electrolytic abrasive grain surface-reduction and ensuring a channel for the electrolyte. A grindstone having constant elasticity can be used as the grindstone 26.

### 1.3.3. Flexible abrasive grain unit

A flexible abrasive grain unit means a unit demonstrating an abrasive action, while having a predetermined elasticity. In the flexible abrasive grain unit, for example, polishing cloth demonstrating an abrasive action is affixed to the foamed rubber having predetermined elasticity.

FIG 5 is a part of a sectional view where a plane including a central axis (rotary shaft) and the flexible abrasive grain unit 27 of the rotation surface-reducing head 220 is a plane of section. This figure is a schematic diagram demonstrating the action of the flexible abrasive grain unit 27 when the stainless steel 9 is surface-reduced by using the rotation surface-reducing head 220. Specifically, the figure shows how the flexible abrasive grain unit 27 is compressively deformed by the pressure from the elevating device 8 and brought into contact with the stainless steel 9.

By using the flexible abrasive grain unit 27, it is possible to perform the surface-reduction treatment by abrasively removing concavities present on the stainless steel. As a result, since the rotation surface-reducing head 220 has the flexible abrasive grain unit 27 in addition to the grindstone 26, it is possible to perform the electrolytic abrasive grain surface-reduction simultaneously for the convexities and the concavities on the surface of the stainless steel 9.

Further, it is possible to perform the electrolytic abrasive grain surface-reduction by covering the entire bottom portion of the rotation surface-reducing head 220 with nonwoven cloth.

### 2. Electrolytic surface-reduction treatment using a roller for electrolytic abrasive grain surface-reduction

### 2.1 Roller for electrolytic abrasive grain surface-reduction

### (1) Roller for electrolytic abrasive grain surface-reduction having an electrode and a grindstone disposed thereon

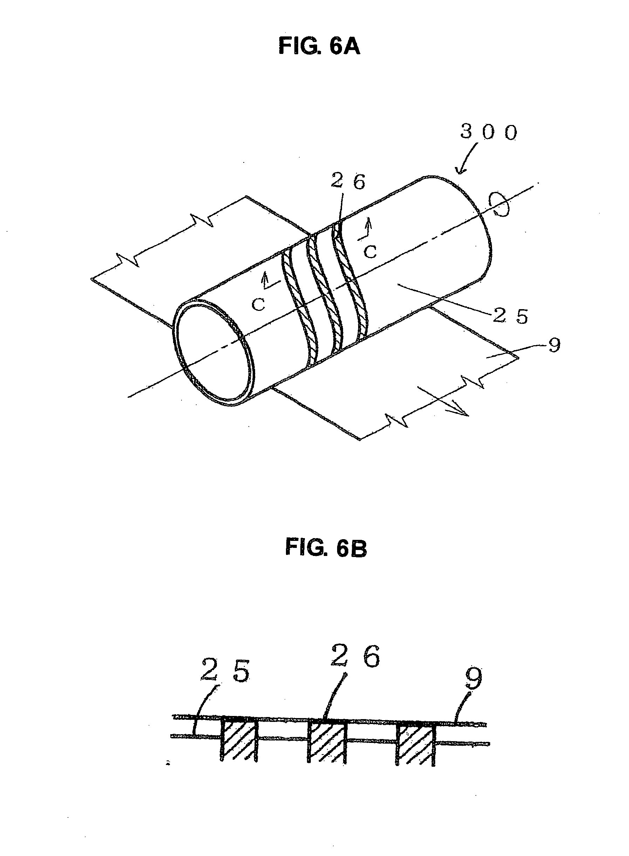

A roller for electrolytic abrasive grain surface-reduction having an electrode and a grindstone disposed thereon will be explained below by using FIG 6A and FIG 6B.

FIG 6A is a perspective view of a roller 300 for electrolytic abrasive grain surface-reduction that illustrates a state in which the roller faces a stainless steel. The roller 300 for electrolytic abrasive grain surface-reduction having an electrode and a grindstone disposed thereon preferably has a round columnar or cylindrical shape, but these shapes are not limiting.

An electrode 25 and a grindstone 26 are disposed on the roller 300 for electrolytic abrasive grain surface-reduction. The number of arranged electrodes and grindstones is not limited, provided that one or more of each are disposed.

It is preferable that the electrodes 25 and the grindstones 26 be disposed spirally and alternately, as shown in FIG 6A, because uniform electrolytic surface-reduction treatment can be performed and the stainless steel 9 can be conveyed easily and smoothly, but such an arrangement is not limiting.

FIG 6B is a cross-sectional view taken along a C-C line in FIG 6A that shows an attachment state of the electrodes 25 and the grindstones 26 to the roller 300 for electrolytic abrasive grain surface-reduction. For the convenience of explanation, FIG 6B also shows the stainless steel 9 and a mutual arrangement when the stainless steel and the roller 300 for electrolytic abrasive grain surface-reduction are in contact with each other.

As shown in FIG 6B, the electrodes 25 and the grindstones 26 are disposed so that the lower surfaces (surfaces facing the stainless steel 9) of the grinding stones 26 are close to the stainless steel 9, and the lower surfaces of the electrodes 25 are not in contact with the stainless steel 9.

Similarly to the rotation surface-reducing head for electrolytic abrasive grain surface reduction, it is preferred that the electrodes 25 be arranged to maintain a constant electric current density during energizing, so as to maintain a distance between the electrodes 25 and the stainless steel 9, thereby preventing a spark between the electrodes and the stainless steel and ensuring a channel for the electrolyte. It is preferred that the grindstones 26 be disposed to have the same height so as to obtain uniform surface-reduction accuracy.

The electrodes 25 for use in the roller 300 for electrolytic abrasive grain surface-reduction are not particularly limited, provided they can be used in the electrolytic abrasive grain surface-reduction. Thus, for example, stainless steel electrodes can be used. Further, for the grindstone 26 for use in the roller 300 for electrolytic abrasive grain surface-reduction, a commercially available usual grindstone can be used, but an elastic grindstone is especially preferred.

### (2) Roller for electrolytic abrasive grain surface-reduction having an electrode, a grindstone, and a flexible abrasive grain unit disposed thereon

In the roller 300 for electrolytic abrasive grain surface-reduction, flexible abrasive grain units (not shown in the figure) can be provided in addition to the electrodes and grindstones. In the flexible abrasive grain unit, for example, surface-reducing cloth is affixed to an elastic body such as a foamed rubber.

In the roller 300 for electrolytic abrasive grain surface-reduction, the electrodes 25, the grindstones 26, and the flexible abrasive grain units are preferably disposed spirally. The sequence in which the electrodes, grindstones, and flexible abrasive grain units are disposed is not particularly limited.

The electrodes, grindstones, and flexible abrasive units are disposed so that the bottom surfaces (surfaces facing the stainless steel) of the flexible abrasive units are the closest to the stainless steel, the bottom surfaces of the grindstones 26 are the next closest to the stainless steel 9, and the bottom surfaces of the electrodes 25 are the farthest from the stainless steel 9.

### 2.2. Electrolytic abrasive grain surface-reduction treatment

As shown in FIG 6A, the roller 300 for electrolytic abrasive grain surface-reduction is disposed above the stainless steel 9 conveyed in one direction.

In the electrolytic surface-reduction treatment using the roller 300 for electrolytic abrasive grain surface-reduction, an electrolyte is supplied between the electrodes 25 and the stainless steel 9. The electrolyte used is similar to that in the surface-reduction treatment performed by the rotation surface-reducing head for electrolytic abrasive grain surface-reduction.

The electrolytic surface reduction treatment is performed by pressing the roller 300 for electrolytic abrasive grain surface-reduction under a predetermined pressure against the stainless steel 9, while rotating the roller in the same direction as the conveying direction of the stainless steel 9 or in the opposite direction, in a state in which the electrolyte is present between the electrodes 25 and the stainless steel 9.

### 2.3.1. Electrode

The electrode material is not particularly limited, but stainless steel is preferred. It is suffice if the electrolyte is present in a gap between the electrodes 25 and the stainless steel 9. For example, the electrolyte may be continuously supplied into the gap, or the gap may be immersed in the electrolyte.

Further, where a voltage is applied between the electrodes 25 and the stainless steel 9, the electric current density generated in the electrolyte is similar to that of the surface-reduction treatment performed by using the rotation surface-reducing head for electrolytic abrasive grain surface-reduction.

### 2.3.2. Grindstone

As described above, the grindstone 26 disposed on the roller 300 for electrolytic abrasive grain surface-reduction is disposed so as to be closer to the stainless steel 9 than the electrode 25. Since the grindstone 26 has high resistance to pressure-induced deformation, even if a pressure is applied to the stainless steel 9 during the surface-reduction treatment, a predetermined distance can be maintained between the electrode 25 and the stainless steel 9, thereby preventing a spark during the electrolytic abrasive grain surface-reduction and ensuring a channel for the electrolyte. A grindstone having constant elasticity can be used as the grindstone 26.

### 2.3.3. Flexible abrasive grain unit

In the flexible abrasive grain unit, for example, polishing cloth demonstrating an abrasive action is affixed to the foamed rubber having predetermined elasticity.

The flexible abrasive grain unit is compressively deformed by the downward pressure and brought into contact with the stainless steel 9. The surface-reduction treatment is thus performed by abrasively removing concavities present on the stainless steel. As a result, since the roller 300 for electrolytic abrasive grain surface-reduction has the flexible abrasive grain unit in addition to the grindstone, it is possible to perform the electrolytic abrasive grain surface-reduction simultaneously for the convexities and concavities on the surface of the stainless steel 9.

Further, it is possible to perform the electrolytic abrasive grain surface-reduction by covering the entire curved surface of the roller 300 for electrolytic abrasive grain surface-reduction with nonwoven cloth.

### 3. Electrolytic surface-reduction treatment in which abrasion and electrolysis are performed separately

As described hereinabove, the electrolytic surface-reduction treatment can be performed with one member such as the rotation pressure-reducing head for electrolytic abrasive grain surface-reduction or the roller for electrolytic abrasive grain surface-reduction roller having electrodes and grindstones, but the electrolysis and abrasion may be also performed separately with electrodes and grindstones or flexible abrasive grain unit, respectively. Thus, the object of the electrolytic surface-reduction treatment may be attained, for example, by performing abrasion by a grindstone by using a rotary grindstone or a rotary abrasive grain belt, performing abrasion by a flexible abrasive grain unit by using a rotary flexible abrasive grain unit or a rotary flexible abrasive grain unit belt, and performing electrolysis by using electrodes. Specific examples include electrolytic surface-reduction treatment in which (1) abrasion by a rotary flexible abrasive grain unit and (2) electrolysis using electrodes are performed in the order of description; electrolytic surface-reduction treatment in which (1) abrasion by a rotary grindstone and (2) electrolysis using electrodes are performed in the order of description; electrolytic surface-reduction treatment in which (1) abrasion by a rotary abrasive grain belt and (2) electrolysis using electrodes are performed in the order of description; electrolytic surface-reduction treatment in which (1) abrasion by a rotary flexible abrasive grain unit belt and (2) electrolysis using electrodes are performed in the order of description, and combinations thereof.

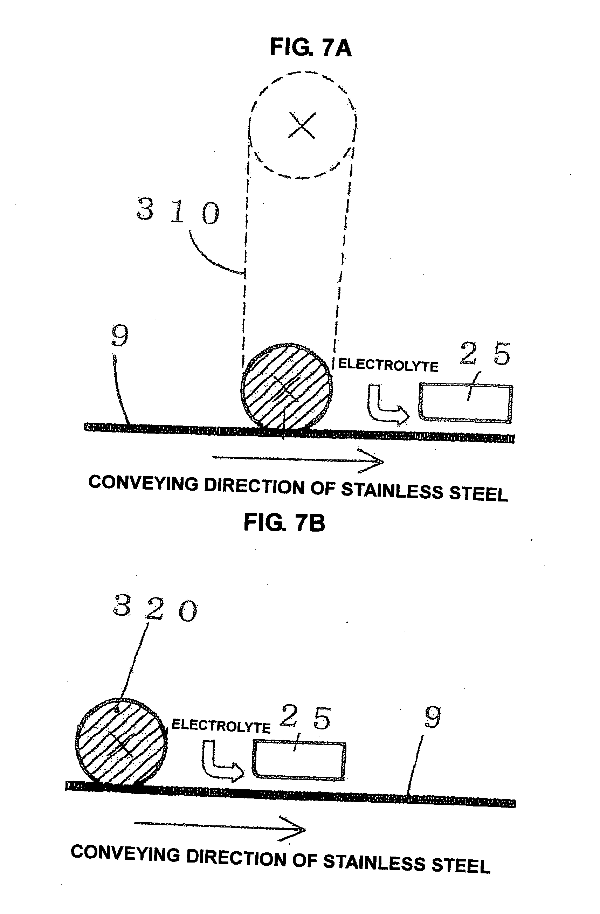

An electrolytic surface-reduction treatment including a step of performing abrasion of stainless steel with a rotary abrasive grain belt, a rotary flexible abrasive grain unit belt, a rotary grindstone, or a rotary flexible abrasive grain unit and then applying a voltage to the electrodes, while causing an electrolyte to flow between the electrodes and the stainless steel will be explained below with reference to FIG 7A and FIG 7B.

In FIG 7A, the reference numeral 310 stands for a rotary abrasive grain belt or a rotary flexible abrasive grain unit belt, and the surface of the stainless steel 9 is abraded by the belt 310. The abraded stainless steel surface is subjected to an electrolytic surface-reduction treatment by applying a voltage via the electrolyte flowing between the electrode 25 and the stainless steel (FIG 7A).

A well-known commercial product can be used as the rotary abrasive grain belt.

A rotary flexible abrasive grain unit belt has a rotatable configuration obtained, for example, by attaching a foamed rubber having predetermined elasticity to the belt and then affixing polishing cloth capable of demonstrating an abrasive action to the foamed rubber.

In FIG 7B, the reference numeral 320 stands for a rotary grindstone or a rotary flexible abrasive grain unit. The surface of the stainless steel 9 may be abraded by the rotary grindstone or rotary flexible abrasive grain unit 320, rather than by the rotary abrasive grain belt or rotary flexible abrasive grain unit belt 310 (FIG 7B).

A rotary grindstone is usually rotatably supported so that roller-shaped center shaft is a rotation axis. A well-known rotary grindstone can be used.

The rotary flexible abrasive grain unit, for example, has a configuration in which polishing cloth demonstrating an abrasive action is affixed to a foamed rubber having predetermined elasticity and can be rotated. For example, a foamed rubber having elasticity is attached to a roller-shaped center shaft, and polishing cloth demonstrating an abrasive action is affixed to the foamed rubber.

The abrasion of the stainless steel 9 is preferably performed in a state of immersion into an electrolyte so that a new surface of the stainless steel 9 that appears after the abrasion by the rotary abrasive grain belt, rotary flexible abrasive grain unit belt, rotary grindstone, and rotary flexible abrasive grain unit be prevented from oxidation by oxygen present in the air.

The electrode 25 is preferably disposed so that electrolysis be performed immediately after the abrasion by the rotary abrasive grain belt or rotary flexible abrasive grain unit belt 310, or the abrasion by the rotary grindstone or rotary flexible abrasive grain unit 320, as shown in FIG 7A and FIG 7B. In such case, the new surface of the stainless steel appearing immediately after the abrasion is prevented from oxidation by oxygen present in the air.

The electrode material is not particularly limited, but stainless steel is preferred. The electrolyte may be continuously supplied into the gap between the electrode 25 and the stainless steel 9, or the gap between the electrode 25 and the stainless steel 9 may be immersed in the electrolyte.

Further, where a voltage is applied between the electrode 25 and the stainless steel 9, the electric current density generated in the electrolyte is similar to that of the surface-reduction treatment performed by using the rotation surface-reducing head for the electrolytic abrasive grain surface-reduction treatment.

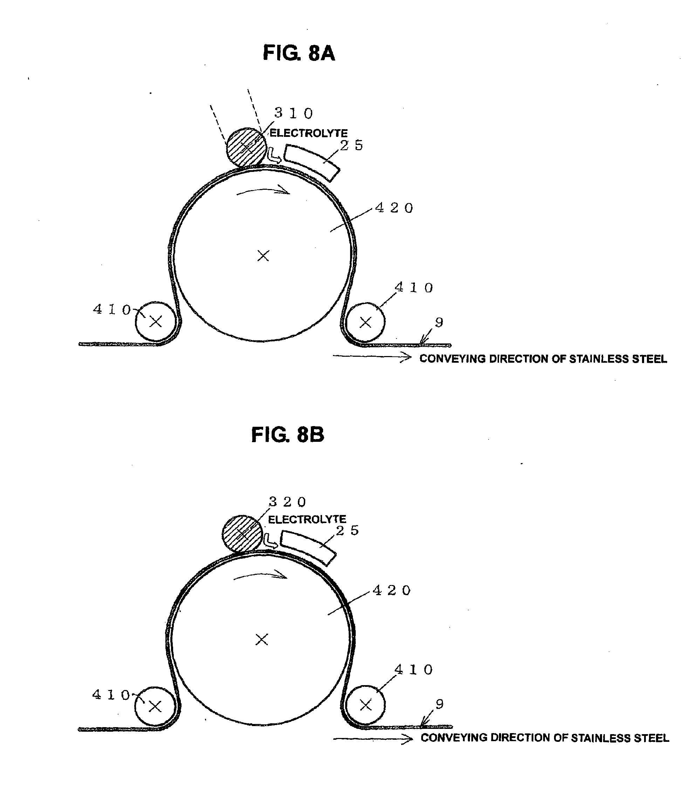

It is preferred that a tension be applied to the stainless steel 9 by using a deflector roller 410 and a guide roller 420 and the abrasion and electrolysis be performed in this state on the guide roller. As a result, a pressure applied to the stainless steel 9 by the rotary flexible abrasive grain unit belt 310 and the rotary grinding stone 320, and also the distance between the electrode 25 and the stainless steel 9 can be accurately controlled. More specifically, as shown in FIG 8A, the abrasion by the rotary abrasive grain belt or rotary flexible abrasive grain unit belt 310 and the electrolysis with the electrode 25 can be performed on the guide roller, while a tension is applied to the stainless steel 9. Further, as shown in FIG 8B, the abrasion by the rotary grindstone or rotary flexible abrasive grain unit 320 and the electrolysis with the electrode 25 can be performed on the guide roller, while a tension is applied to the stainless steel 9.

### 4. Stainless steel subjected to surface treatment with electrolytic abrasive grain surface-reduction

In the preferred embodiment of the present invention, a film having rust resistance and corrosion resistance is formed on the stainless steel surface by performing the electrolytic abrasive grain surface-reduction treatment by using a rotary surface-reducing head for electrolytic abrasive grain surface-reduction.

The film having rust resistance and corrosion resistance can be estimated, for example, by GDS analysis.

The surface treatment by the electrolytic abrasive grain surface-reduction forms a film with a high ratio of O on the stainless steel surface.

Accordingly, a thickness of the film having rust resistance and corrosion resistance that has been formed on the stainless steel surface can be estimated by analyzing the surface of stainless steel subjected to the surface treatment by electrolytic abrasive grain surface-reduction in accordance with the present invention, for example, on the basis of element concentration distribution in the depth direction determined by GDS.

More specifically, the thickness of the anticorrosive coat formed on the stainless steel surface can be estimated by using a distance (half-width) from the stainless steel surface to a location in which the O element concentration becomes half the maximum value in the element concentration distribution in the depth direction determined by GDS. Where a thick anticorrosive film is formed, a high O element concentration is maintained, that is, the half-width increases, even in locations at a large depth from the surface.

Rust resistance and corrosion resistance of the stainless steel can be estimated not only by the GDS analysis, but also by measuring a pitting corrosion potential by a well-known method.

### EXAMPLES

The surface treatment method in accordance with the present invention and the stainless steel subjected to the surface treatment by this method will be explained below in greater detail by examples. However, the present invention is not limited to these examples.

### [Example 1: SUS304 stainless steel subjected to the surface treatment in accordance with the present invention]

First, a rotary surface-reducing head having the structure shown in FIG 1A to FIG 1C and satisfying the following conditions was fabricated.
Surface-reducing head (including electrodes and grindstones).
Surface-reducing head diameter: 240 mm
Electrode: from copper alloy
Grindstone: elastic grindstone #240
Rotation speed of surface-reducing head: 350 rpm
Pressure applied to surface-reducing head: 1 kg/cm²
Electrolyte: aqueous solution of sodium nitrate with a concentration of 30 wt%
Flow velocity of electrolyte: 6 m/sec
Current density: 21 A/cm²

FIG 3 is an overall view showing a surface-reducing device equipped with the rotation surface-reducing head.

A flat bar of commercial SUS304 stainless steel (cross section dimensions: 9 x 100 mm) (pickled surface) was one-pass polished using the surface-reducing device equipped with the rotation surface-reducing head.

The measured center-like average roughness Ra of the surface of the SUS304 stainless steel 1 subjected to the surface treatment was 0.21 µm.

Pitting corrosion potential measurements and GDS analysis were then conducted with respect to the SUS304 stainless steel 1.

### (1) Pitting corrosion potential

According to JIS G0577, a 3.5% NaCl solution was controlled to 30°C and an electric potential Vc' 100 attained when the current density after sufficient degassing became 100 µA/cm² was measured four times with respect to the surface-treated SUS304 stainless steel 1.

The following results were obtained: 0.952 (V vc. Ag-AgCl), 1.074 (V vc. Ag-AgCl), 1.081 (V vc. Ag-AgCl), and 1.128 (V vc. Ag-AgCl). The average potential was 1.06 (V vc. Ag-AgCl).

### (2) GDS analysis

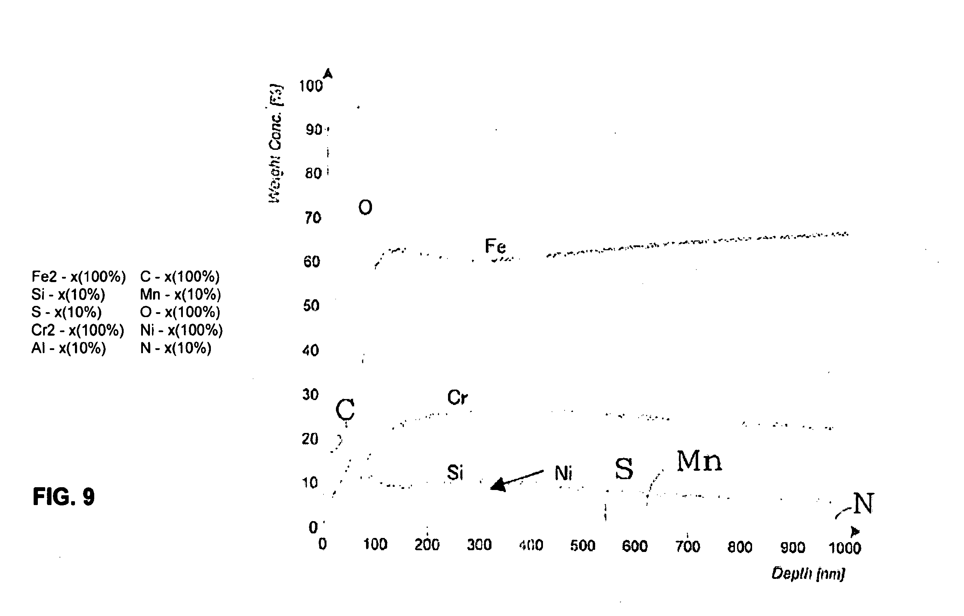

Element distribution analysis in depth direction was conducted by GDS with respect to the surface-treated SUS304 stainless steel 1. The results are shown in FIG 9.

Based on the analysis results, the half-width of the composition distribution of O in the GDS analysis was 70 nm.

### [Example 2: 409L stainless steel subjected to the surface treatment in accordance with the present invention]

A flat bar of commercial 409L stainless steel (cross section dimensions: 9 x 100 mm) (pickled surface) was one-pass polished under the same conditions as in Example 1.

A pitting corrosion potential (Vc' 100) was measured in the same manner as in Example 1 with respect to the 409L stainless steel 2 subjected to such surface treatment. The average value of the potential was 0.28 (V vc. Ag-AgCl).

### [Comparative Example 1: SUS304 stainless steel subjected to wet polishing]

Part of a flat bar of SUS304 stainless steel from the same lot as the flat bar of SUS304 stainless steel used in Example 1 was cut off and the flat bar surface was mirror finished by belt polishing and #600 wet polishing.

A pitting corrosion potential was measured three times under the same conditions as in Example 1 with respect to the SUS304 stainless steel 3 subjected to such surface treatment. The following results were obtained: 0.356 (V vc. Ag-AgCl), 0.455 (V vc. Ag-AgCl), and 0.581 (V vc. Ag-AgCl). The average potential was 0.46 (V vc. Ag-AgCl).

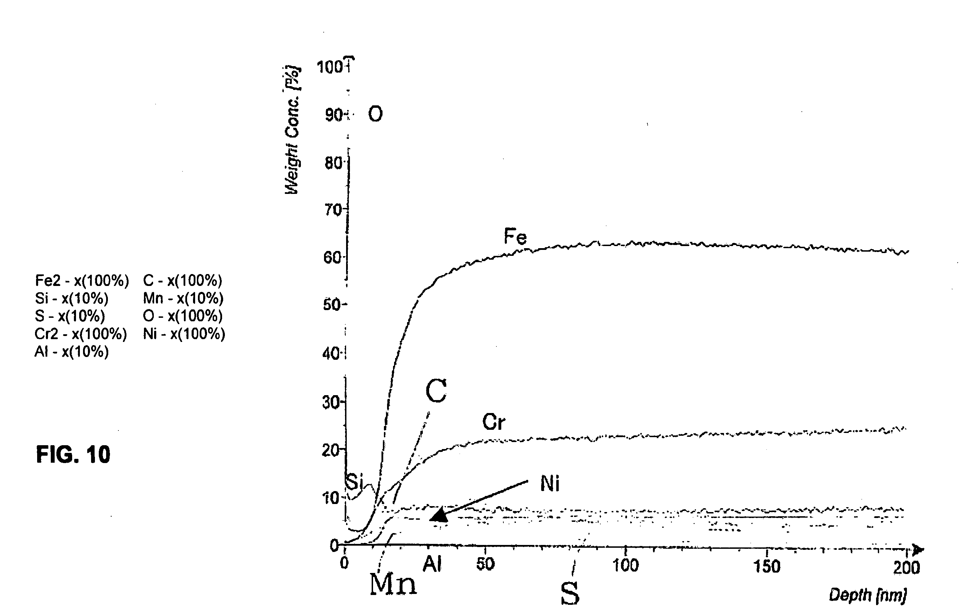

Element distribution analysis in depth direction was conducted by GDS with respect to the surface-treated SUS304 stainless steel 3. The results are shown in FIG 10.

Based on the analysis results, the half-width of the composition distribution of O in the GDS analysis was 15 nm.

### [Comparative Example 2: Annealed and pickled 409L stainless steel]

Part of 409L stainless steel from the same lot as the 409L stainless steel used in Example 2 was cut off and the stainless steel surface was #400 buff mirror finished by belt polishing and buff polishing.

A pitting corrosion potential (Vc' 100) was measured in the same manner as in Example 1 with respect to the 409L stainless steel 4 subjected to such surface treatment. The average potential was 0.07 (V vc. Ag-AgCl).

The results obtained in Example 1, Example 2, Comparative Example 1, and Comparative Example 2 are summarized in the following table.

**Table 1**

| | Example 1 | Comparative Example 1 | Example 2 | Comparative Example 2 |
|---|---|---|---|---|
| | Stainless steel 1 SUS304 | Stainless steel 3 SUS304 | Stainless steel 2 409L | Stainless steel 4 409L |
| Pitting corrosion potential (Vc'100/V.vc.Ag-AgCl) | 1.06 | 0.46 | 0.28 | 0.07 |
| Half-width of composition distribution of O in GDS analysis (nm) | 70 | 15 | - | - |

As shown in Table 1, the pitting corrosion potential of the stainless steel subjected to the surface treatment by the electrolytic surface-reduction treatment was much higher and corrosion resistance was higher than those of the stainless steel subjected to the surface treatment by the conventional method. Further, according to the GDS analysis, the half-width of O (oxygen) in the stainless steel subjected to the surface treatment by the electrolytic surface-reduction treatment was much higher than that in the stainless steel subjected to the surface treatment by the conventional method, and a thick anticorrosive film with a high content ratio of O (oxygen) was formed.

### INDUSTRIAL APPLICABILITY

The present invention can be used in the manufacture, for example, of stainless steel H beams, columns, square pipes, flat bars, and plates.

## Claims

1. A stainless steel comprising: 0.001 to 0.15 wt% of C, 0.01 to 1.00 wt% of Si, 0.01 to 10.00 wt% of Mn, 0.001 to 0.060 wt% of P, 0.0001 to 0.10 wt% of S, 3.50 to 28.00 wt% of Ni, 16.00 to 26.00 wt% of Cr, and 0.001 to 0.08 wt% of O, optionally further comprising: 2.00 wt% or less of Al, 7.00 wt% or less of Mo, 4.00 wt% or less of Cu, and 0.30 wt% or less of N, 0.75 or less of Ti with a balance comprising Fe and unavoidable impurities, wherein a pitting corrosion potential Vc' 100 of a surface is 0.60 to 1.2 (V. vc. Ag-AgCl)and wherein a half-width of an element concentration distribution of O in GDS analysis is 20 to 100 nm from a stainless steel surface.

2. The stainless steel according to claim 1, comprising: 0.001 to 0.08 wt% of C, 0.01 to 1.00 wt% of Si, 0.01 to 2.00 wt% of Mn, 0.001 to 0.045 wt% of P, 0.0001 to 0.030 wt% of S, 8.00 to 10.50 wt% of Ni, 18.00 to 20.00 wt% of Cr, and 0.001 to 0.06 wt% of O, wherein the pitting corrosion potential Vc' 100 of the surface is 0.70 to 1.2 (V. vc. Ag-AgCl).

3. The stainless steel according to any one of claims 1 to 2, that excels in rust resistance and corrosion resistance.

## Patentansprüche

1. Edelstahl, umfassend: 0,001 bis 0,15 Gew.-% C, 0,01 bis 1,00 Gew.-% Si, 0,01 bis 10,00 Gew.-% Mn, 0,001 bis 0,060 Gew.-% P, 0,0001 bis 0,10 Gew.-% S, 3,50 bis 28,00 Gew.-% Ni, 16,00 bis 26,00 Gew.-% Cr und 0,001 bis 0,08 Gew.-% O, gegebenenfalls ferner umfassend: 2,00 Gew.-% oder weniger Al, 7,00 Gew.-% oder weniger Mo, 4,00 Gew.-% oder weniger Cu und 0,30 Gew.-% oder weniger N, 0,75 Gew.-% oder weniger Ti, wobei der Rest Fe und unvermeidbare Verunreinigungen umfasst, wobei das Lochkorrosionspotential Vc' 100 der Oberfläche 0,60 bis 1,2 (V. vs. Ag-AgCl) beträgt und wobei die Halbwertsbreite der Elementkonzentrationsverteilung von O bei einer GDS-Analyse 20 bis 100 nm einer Edelstahloberfläche beträgt.

2. Edelstahl nach Anspruch 1, umfassend: 0,001 bis 0,08 Gew.-% C, 0,01 bis 1,00 Gew.-% Si, 0,01 bis 2,00 Gew.-% Mn, 0,001 bis 0,045 Gew.-% P, 0,0001 bis 0,030 Gew.-% S, 8,00 bis 10,50 Gew.-% Ni, 18,00 bis 20,00 Gew.-% Cr und 0,001 bis 0,06 Gew.-% O, wobei das Lochkorrosionspotential Vc' 100 der Oberfläche 0,70 bis 1,2 (V. vs. Ag-AgCl) beträgt.

3. Edelstahl nach einem der Ansprüche 1 bis 2, **gekennzeichnet durch** Rostbeständigkeit und Korrosionsbeständigkeit.

## Revendications

1. Acier inoxydable comprenant: 0.001 à 0.15% en poids de C, 0.01 à 1.00% en poids de Si, 0.01 à 10.00% en poids de Mn, 0.001 à 0.060% en poids de P, 0.0001 à 0.10% en poids de S, 3.50 à 28.00% en poids de Ni, 16.00 à 26.00% en poids de Cr, et 0.001 à 0.08% en poids de O, facultativement comprenant en outre: 2.00% en poids ou moins d'Al, 7.00% en poids ou moins de Mo, 4.00% en poids ou moins de Cu, 0.30% en poids ou moins de N, et 0.75% ou poids ou moins de Ti; avec un solde comprenant du Fe et des impuretés inévitables, dans lequel un potentiel de corrosion par piqûres Vc' 100 d'une surface est de 0.60 à 1.2 V par rapport au potentiel de référence Ag-AgCl et dans lequel une demi-largeur d'une distribution de concentration d'un élément de O en analyse GDS (spectrométrie à décharge incandescente) est de 20 à 100 nm d'une surface d'acier inoxydable.

2. Acier inoxydable selon la revendication 1, comprenant: 0.001 à 0.08% en poids de C, 0.01 à 1.00% en poids de Si, 0.01 à 2.00% en poids de Mn, 0.001 à 0.045% en poids de P, 0.0001 à 0.030% en poids de S, 8.00 à 10.50% en poids de Ni, 18.00 à 20.00% en poids de Cr, et 0.001 à 0.06% en poids de O, dans lequel le potentiel de corrosion par piqûres Vc' 100 de la surface est de 0.70 à 1.2 V par rapport au potentiel de référence Ag-AgCl.

3. Acier inoxydable selon l'une des revendications 1 ou 2, qui excelle en résistance à la rouille et en résistance à la corrosion.
